Europäisches Patentamt

European Patent Office

Office européen des brevets

(11) Publication number: **0 174 498**
**A1**

(12) **EUROPEAN PATENT APPLICATION**

(21) Application number: **85109923.4**

(22) Date of filing: **07.08.85**

(51) Int. Cl.⁴: **F 16 G 11/00**

(30) Priority: **09.08.84 JP 122258/84 U**

(43) Date of publication of application:
**19.03.86 Bulletin 86/12**

(84) Designated Contracting States:
**BE CH DE FR IT LI NL SE**

(71) Applicant: **NIPPON NOTION KOGYO CO., LTD.**
**13, 2-chome, Kanda-Sakuma-cho Chiyoda-ku**
**Tokyo(JP)**

(72) Inventor: **Kasai, Kazumi**
**3105-1, Kamikoizumi**
**Namerikawa-shi Toyama-ken(JP)**

(74) Representative: **Casalonga, Axel et al,**
**BUREAU D.A. CASALONGA OFFICE JOSSE & PETIT**
**Baaderstrasse 12-14**
**D-8000 München 5(DE)**

(54) **Cord fastener.**

(57) A cord fastener (10) for use on garments, bags, hats and the like, is molded of synthetic resin into a multi-component yet integral structure. The fastener has a guide-channel (12a, 12b) for the passage of a strap (S) or the like and a locking means (23) movable into and away from a plane of the guide-channel to lock and release the strap. This movement is effected by elastic deformation of a portion (29) of the fastener body through the medium of a plurality of apertures (14, 14', 16, 16' and 25).

**FIG.6**

EP 0 174 498 A1

Croydon Printing Company Ltd.

0174498

- 1 -

CORD FASTENER

The present invention relates to a cord fastener for adjustably fastening or stopping a fastening cord or string attached to a helmet, a hat, a sack, a garment, or other various articles, and more particularly to such a cord fastener constructed to utilize a spring force in locking a cord in position against displacement.

Various cord or string fasteners are known in the art which are attached to cords or strings on helmets, hats, bags, garments, or other objects for adjustably fastening or stopping the cords. One prior cord fastener is shown in Japanese Utility Model Laid-Open Publication No. 49-23670 published on February 28, 1974. The disclosed cord fastener is composed of an outer tube having an axial blind hole opening upwardly and a diametrical hole defined near its upper end, and an insert movably fitted in the blind hole in the outer tube and having a transverse through-hole. The ends of a cord which are inserted through the diametrical hole and the transverse through-hole are gripped between the outer tube and the insert which is resiliently urged upwardly by a compression coil spring disposed on the bottom of the blind hole in the outer tube.

Such prior cord fastener however has a difficulty firstly in that it is costly to make because there are three separate component parts to be assembled and secondly in that the insert member is apt to turn loose and get lost when the cord is released out of place.

With the foregoing difficulties of the prior art in view, the present invention is aimed at the provision of a new, useful cord fastener having an integral construction which is free of assembling and disassembling of structural components and hence is easily manipulatable and which can be manufactured at less cost. -

According to the present invention, there is provided a cord fastener comprising a pair of oppositely disposed support members having at least a pair of transversely aligned guide channels, respectively, for the passage of a cord, a presser member movably disposed between said support members and having a cord locking portion engageable with the cord to lock the same in position between said support members and said presser member, and a spring means acting between said support members and said presser member for urging said cord locking portion in a position located between said guide channels, said presser member having a gripping portion integral with said cord locking portion and manually displacable to bring said cord locking portion out of alignment with said guide channels, against the force of said spring means, characterized in that said spring means comprises an elastically deformable connector member extending integrally between respective lower end portions of said support members, and that said presser member extends integrally from said connector member.

The invention will be better understood from the following detailed description of preferred embodiments taken in conjuction with the accompanying drawings in which like reference numerals refer to like or corresponding parts throughout the several views.

Figure 1 is a front elevational view of a cord fastener embodying the invention;

Figure 2 is a right-hand side elevation of the fastener of Figure 1;

Figure 3 is a plan view of the fastener;

Figure 4 is a cross-sectional view taken along line IV - IV of Figure 1;

Figure 5 is a cross-sectional view taken along line V - V of Figure 1;

Figure 6 is a cross-sectional view taken along line VI - VI of Figure 3;

Figure 7 is a view similar to Figure 6 but showing the fastener in operative position;

Figure 8 is a longitudinal cross-sectional view of a mold employed to make the cord fastener of the invention;

Figure 9 is a cross-sectional view taken along line IX - IX of Figure 8;

Figure 10 is a plan view of a cord fastener provided in accordance with another embodiment of the invention;

Figure 11 is a right-hand side elevation of the same;

Figure 12 is a cross-sectional view taken along line XII - XII of Figure 10;

Figure 13 is a front elevational view of still another form of cord fastener embodying the invention;

Figure 14 is a right-hand side elevation of Figure 13; and

Figure 15 is a plan view of Figure 13.

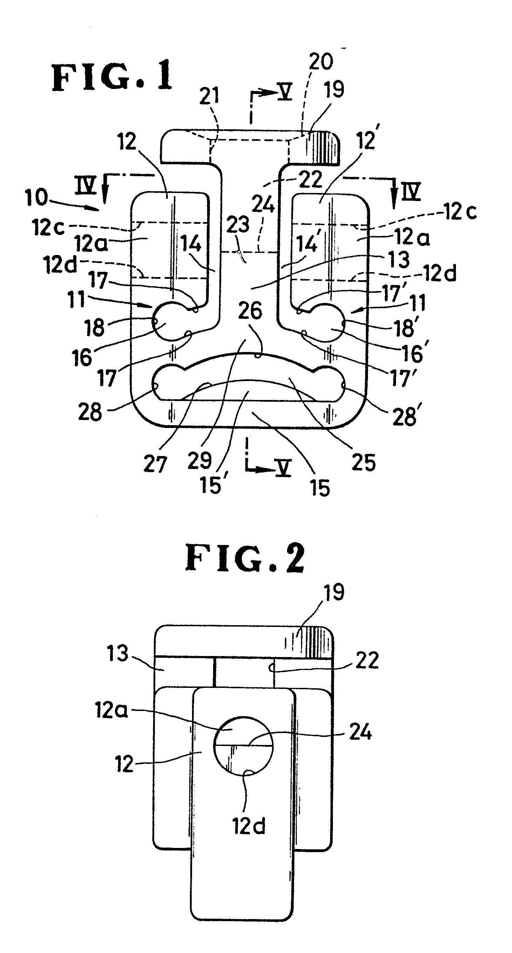

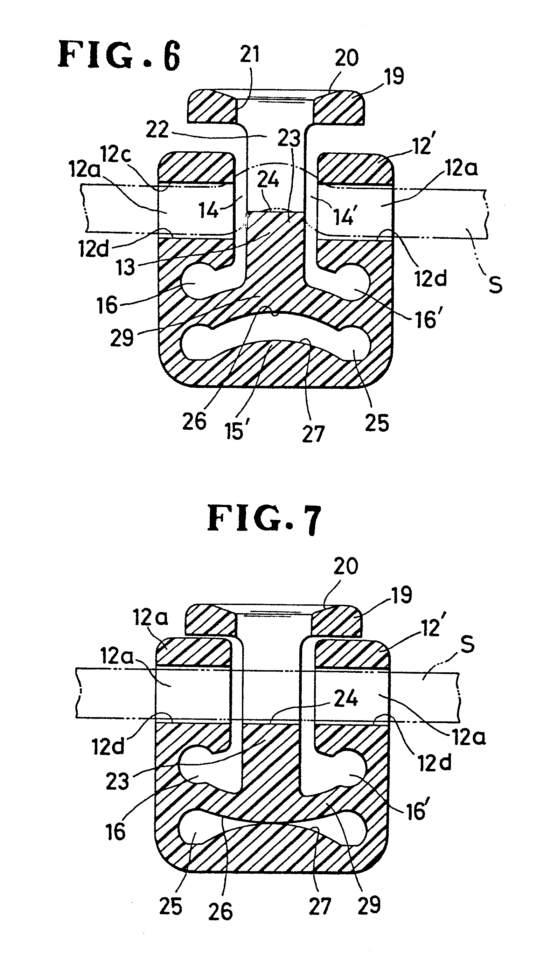

Referring now to the drawings and Figures 1 - 7 inclusive which illustrate a preferred form of cord fastener in accordance with the invention, the cord fastener 10 is molded of synthetic resin into a multi-component yet integral structural unit. The cord fastener 10 comprises a body portion 11, a pair of oppositely disposed shoulder portions or support members 12, 12' extending upwardly from the body portion 11, a neck portion or a presser member 13 interposed between the opposite shoulder portions 12, 12' across an elongate vertical straight space 14, 14', and a foot portion or a connector member 15. The shoulder portions 12, 12' are provided with guide-channels 12a, 12a, respectively that are defined by top and bottom walls 12c, 12d and extend horizontally therethrough in registry with each other to serve as a guide channel for the passage of a cord S (Figures c and 7). Merged with the straight gaps 14, 14' are a pair of symmetrical apertures or recesses 16, 16' each formed in the region of the body portion 11 and defind by normally downwardly tilted parallel marginal walls 17, 17 and 17', 17' and semicircular marginal walls 18, 18', as better shown in Figures 1 and 6.

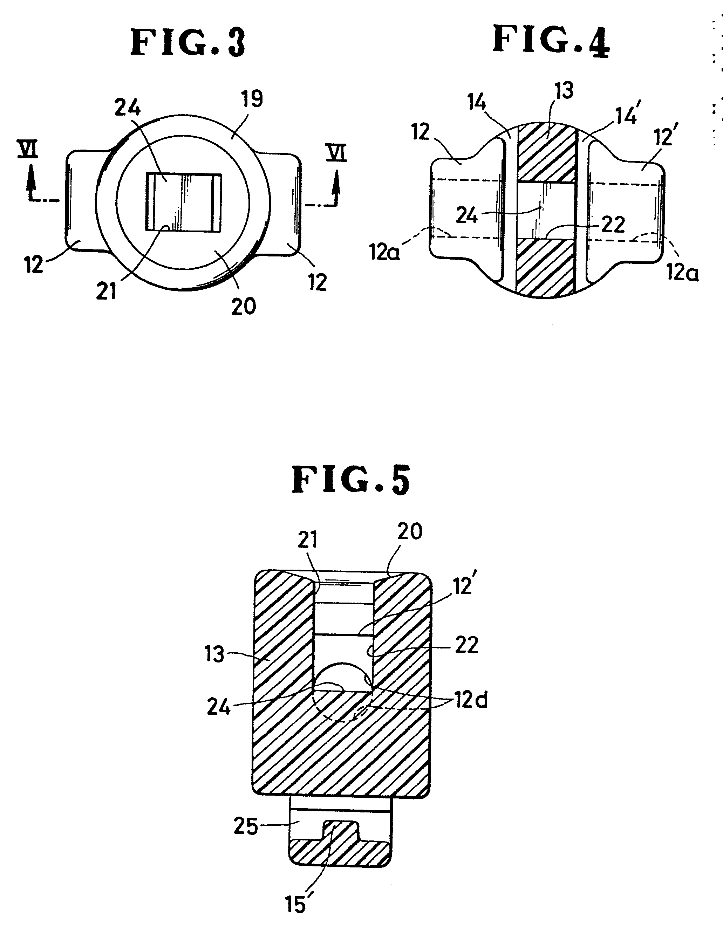

The neck portion 13 is connected with a flange-like head or gripping portion 19 which has a circular recess 20 in its upper surface and a central cross-sectionally rectangular opening 21 communicating with a bore 22 of a square cross-section as shown in Figure 3, the bore 22 terminating with a cord locking portion 23. The cord locking portion 23 is defined by a buttom wall 24 of the bore 22 which is normally lies in a common axis of the guide-channels 12a, 12a and serving as a means to grip the cord S in place within the guide-channels 12a, 12a as hereafter described.

Adjacent to the foot portion 15 is formed a horizontally elongated aperture 25 which is defined by an upper marginal wall 26 whose contour is normally concave, a lower marginal wall 27 which is normally convex, and contiguous semicircular walls 28, 28'.

The apertures 16, 16' and 25 extend all the way through the body portion 11 in a direction normal to the plane of the drawings.

An intermediate spring portion or an elastically deformable connector member 29 is formed in contiguity with the cord locking portion 23 intermediate between the symmetrical apertures 16, 16' and the elongate aperture 25. The spring portion 29 is upwardly covex and rendered elastically deformable by reducing its thickness as compared to the rest of the portions of the fastener 10.

The foot portion 15 of the cord fastener has a reinforcing rib 15' immediately adjacent to the aperture 25 and contiguous to the lower marginal wall 27 defining the aperture 25, the rib 15' serving to limit thereat the eleastic deformation of the spring portion 29. The foot portion 15 having such rinforcing rib 15 is rigid and elastically undeformable. As shown in Figure 2, the neck portion 13 is thicker than the shoulder portions 12, 12'.

With this construction, the cord S inserted through the openings 12a, 12b may be moved to adjust its effective length over an article not shown or to replace with a new one. This is done b: ????? ... . the head portion 19 with fingers received in th? ? ..?s 20, which causes the spring portion 29 to ?? ?tically deform from the condition of Figure 6 into th? condition of Figure 7 with the aperture 16, 16' enlarged and with the aperture 25 reduced, more specifically with the upper convex wall 26 partially abutted against the concave lower wall 27. In this instance, the presser portion 23 which has been projecting into the level of the guide-channels 12a, 12a is now retracted with its top surface 24 substantially aligned flush with the lower walls 12d of the openings 12a, 12a, thereby allowing the cord S to move for adjustment.

    - After adjustment of the cord S, the same may be locked in place simply by releasing the fingers from the head portion 19 of the fastener 10, whereupon the spring portion 29, which has been elastically deformed, returns by its own resiliency to the original position shown in Figures 1 and 6 in which the presser portion 23 again projects into the level of the guide-channels 12a, 12a, anchoring the cord S in place against displacement.

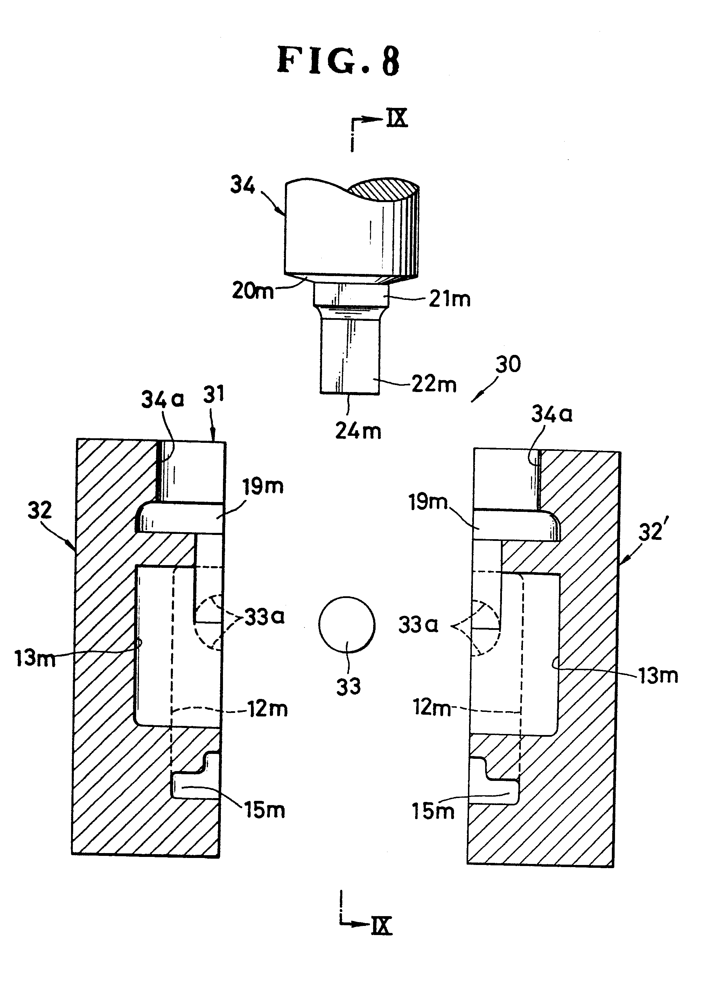

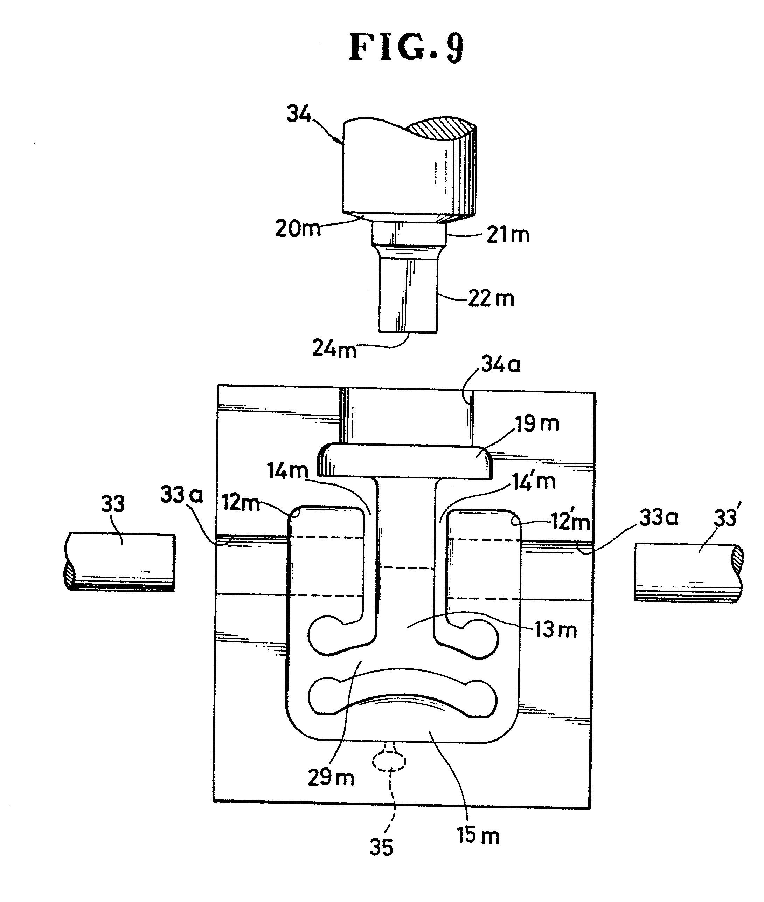

        Figures 8 and 9 are utilized to schematically illustrate a typical injection molding apparatus 30 which may be used to form the cord fastener 10 of the above described construction, the apparatus 30 essentially comprising a main mold 31 including mold halves 32, 32', a pair of first auxiliary mold members or cores 33, 33' and a second auxiliary mold member or core 34. Designated at 35 (Figure 9) is a sprue for pouring molten plastic material into the system of the mold 31. The mold halves 32, 32' are coupled together as shown in Figure 9 during molding operation and separated as shown in Figure 8 to eject the molded product. The first cores 33, 33' are horizontaly slidable toward and away from the mold 31 and receivable in corresponding bores 33a defined in the main mold 31. The second core 34 is vertically slidable toward and away the mold 31 and receivalbe in a bore 34a defined in the main mold 31. As the operation of an injection molding apparatus of this type is well known, it should suffice to indentify the various forming parts of the apparatus by the same numerals as used for the corresponsing parts of molded product fastener 10 of Figures 1 - 7, noting that the corresponding numerals for the apparatus parts are suffixed with "m".

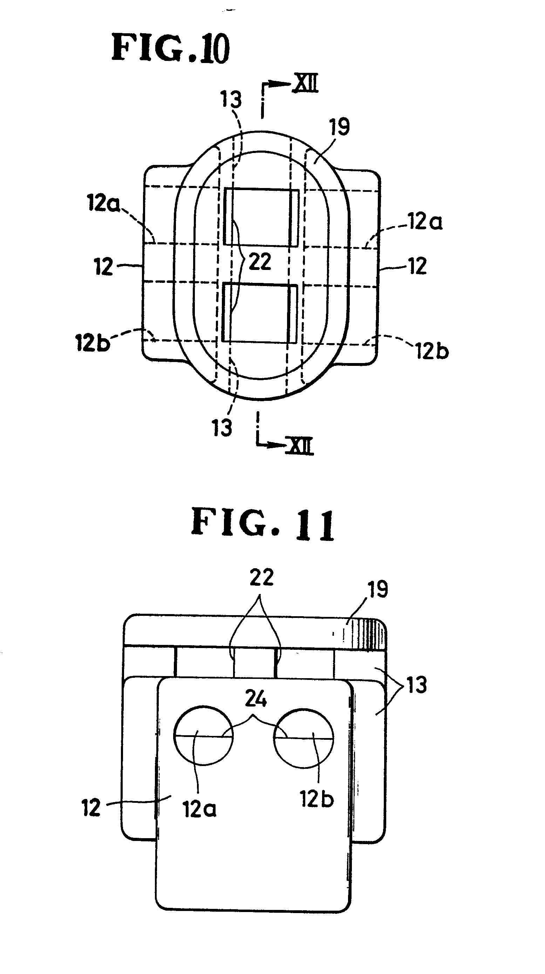

Figures 10 - 12 inclusive shows a modification of the present invention which is identical with the embodiment of Figures 1 - 7 only with the exception that there are provided two parallel guide-channels 12a, 12b for passing two cords (not shown) and hence two gripping surfaces 24 of the cord locking presser

0174498

- 9 -

portion 23 for releasably gripping the cords within respective openings 12a, 12b. The guide channels 12a, 12b extend in the same plane.

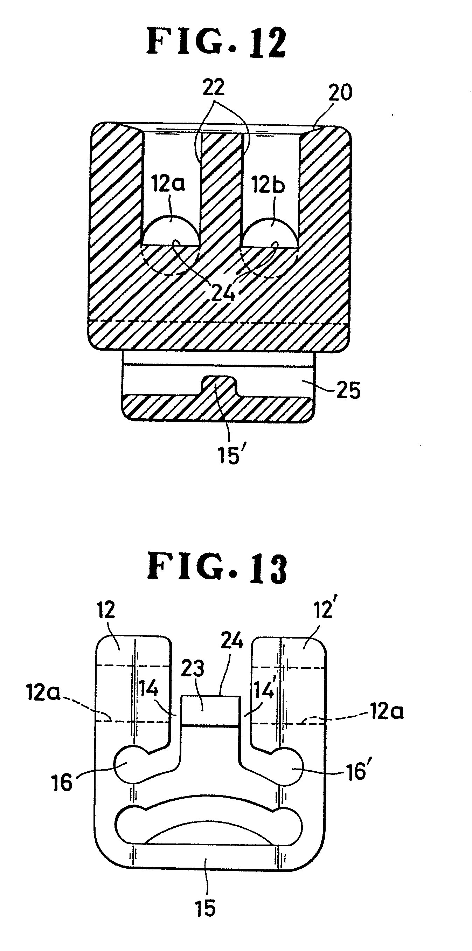

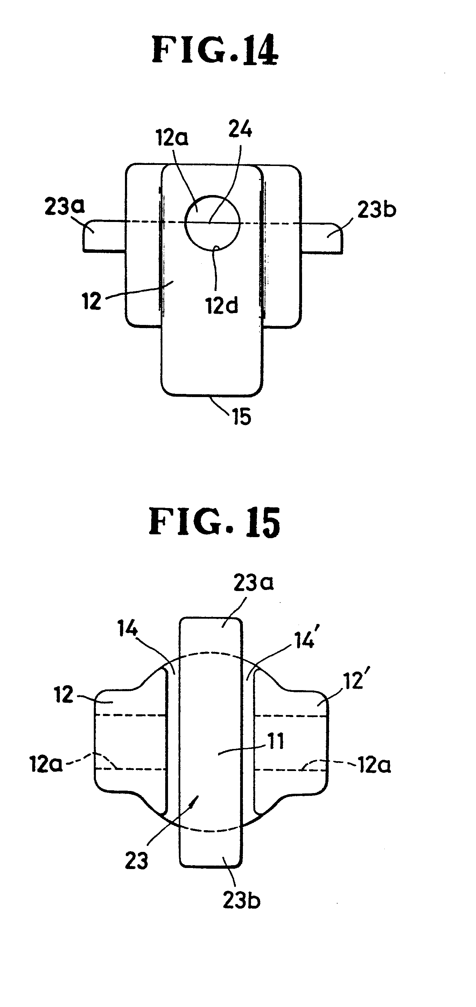

Figures 13 - 15 inclusive shows another modification of the present invention which is identical with the embodiment of Figures 1 - 7 with the exception that the presser portion 23 is disposed between the guide channels 12a, 12a and has a top surface 24 lying substantially in a common axis of the guide channels 12a, 12a, and that a gripping portion is elongated as at 23a, 23b so as to project transversely across and beyond the region of the shoulder portions 12, 12'. The cord fastener 10 according to this modification is conveniently manipulated by holding the projected ends 23a, 23b of the presser portion 23 with index finger and middle finger, respectively while holding the foot portion 15 with thumb during the operation which has been described in connection with the embodiment of Figures 1 - 7.

- 10 -

0174498

CLAIMS:

1. A cord fastener comprising a pair of oppositely disposed support members (12, 12') having at least a pair of transversely aligned guide channels (12a, 12a), respectively, for the passage of a cord (S), a presser member (13) movably disposed between said support members (12, 12') and having a cord locking portion (24) engageable with the cord (S) to lock the same in position between said support members (12, 12') and said presser member (13), and a spring means (29) acting between said support members (12, 12') and said presser member (13) for urging said cord locking portion (24) in a position located between said guide channels (12a, 12a), said presser member (13) having a gripping portion (19) integral with said cord locking portion (24) and manually displacable to bring said cord locking portion (24) out of alignment with said guide channels (12a, 12a), against the force of said spring means (29), characterized in that said spring means comprises an elastically deformable connector member (29) extending integrally between respective lower end portions of said support members (12, 12'), and that said presser member (13) extends integrally from said connector member (29).

2. A cord fastener according to claim 1, further including an elastically undeformable connector member (15) extending integrally between said lower end portions of said support members (12, 12') and disposed below said elastically deformable connector member (29) in spaced relation thereto.

3. A cord fastener according to claim 2, said elastically undeformable connector member (15) including a longitudinal reinforcing rib (15) projecting toward said elastically deformable connector member (29) and engageable with said elastically undeformable connector member (29) to limit elastic deformation of the latter.

4. A cord fastener according to claim 1, said elastically deformable connector member (29) having an upwardly projecting arcuate shape.

5. A cord fastener according to claim 1, said lower portion of each of said support portions having at least one recess (16) adjacent to said elastically deformable·connector member (29).

6. A cord fastener according to claim 1, said support portions (12, 12') having two pairs of transversely aligned guide channels (12a, 12b), respectively, and said presser member (13) having two locking portions (24) each of which is normally disposed between a corresponding pair of said guide channels (12a, 12b).

7. A cord fastener according to claim 6, said guide channels (12a, 12b) extending in the same plane.

8. A cord fastener according to claim 1, said presser member (13) projecting upwardly outwardly beyond said support members (12, 12') and having a transverse bore (22) disposed out of coaxial alignment with said guide channels (12a, 12a) toward an upper end of said presser member (13), said transverse bore (22) having a bottom wall (24) defining said locking portion, said gripping portion (19) being integral with said upper end of said presser member (13).

9. A cord fastener according to claim 8, said transverse bore (22) having a substantially square shape and including a bottom wall (24) lying in a common axis of said guide channels (12a, 12a).

10. A cord fastener according to claim 8, said gripping portion (19) having an upper surface and a recess (20) defined in said upper surface.

11. A cord fastener according to claim 1, said presser member (13) having a top surface (24) defining said locking portion, said gripping portion (23a, 23b) extending perpendicularly to said guide channels (12a, 12a) and projecting facewise beyond said support members (12, 12').

12. A cord fastener according to claim 11, said top surface (24) lying substantially in common axis of said guide grooves (12a, 12a).

13. A cord fastener according to claim 1, said support members (12, 12') being thinner than said presser member (13).

- 13 -

14. A cord fastener according to claim 1, said support members (12, 12'), said connector member (29) and said presser member (13) being integrally molded of synthetic resin.

# FIG. 1

# FIG. 2

# FIG. 3

# FIG. 4

# FIG. 5

## FIG.6

## FIG.7

# FIG. 8

# FIG. 9

# FIG.10

# FIG. 11

# FIG. 12

# FIG. 13

0174498

# FIG.14

# FIG. 15

**European Patent Office**

## EUROPEAN SEARCH REPORT

Application number

EP 85 10 9923

| | DOCUMENTS CONSIDERED TO BE RELEVANT | | |
|---|---|---|---|
| Category | Citation of document with indication, where appropriate, of relevant passages | Relevant to claim | CLASSIFICATION OF THE APPLICATION (Int. Cl.4) |
| Y | GB-A-2 131 868 (AB FIXFABRIKEN) * Page 1, lines 82-108; figures 1,5 * | 1,8,9 | F 16 G 11/00 |
| Y | FR-A-2 377 105 (PHILIPS) * Page 2, lines 3-25; page 3, lines 12-15; figure 1 * | 1 | |
| A | DE-A-1 947 966 (ROSENAUER) * Page 3, lines 1-23; figure 2 * | 1,6,7 | |
| A | US-A-4 453 292 (BAKKER) | | |
| A | US-A-4 328 605 (HUTCHISON) | | |
| A,D | JP-U-49 023 670 | | TECHNICAL FIELDS SEARCHED (Int. Cl.4) F 16 G B 65 D A 44 B A 43 C H 01 R |

The present search report has been drawn up for all claims

| Place of search THE HAGUE | Date of completion of the search 25-11-1985 | Examiner BARON C. |
|---|---|---|

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82